# EUROPEAN PATENT APPLICATION

(11) **EP 2 071 101 A1**
(43) Date of publication of application: **17.06.2009**
(21) Application number: 07791389.5
(22) Date of filing: 26.07.2007
(51) Int. Cl.: E04H 1/12

(54) **PREFABRICATED COMPARTMENT AND FITTING**

(30) Priority: 02.10.2006 JP 2006270763
(71) Applicant: One's I Co., Ltd., Toyonaka-shi Osaka 5600033 (JP)
(72) Inventor: SAITO, Eizo, Toyonaka-shi, Osaka 561-0801 (JP)
(74) Representative: Prüfer & Partner GbR European Patent Attorneys
(86) International application number: PCT/JP2007/064689
(87) International publication number: WO 2008/041408

(57) **Abstract**

An assemblable enclosure includes sidewalls 111, which are made of corrugated plastic sheets and surround a predetermined space, and a ceiling 15, which is detachably mounted on the upper part of the sidewalls 111 and made of a corrugated plastic sheet. The detachable ceiling 15 is attached to the upper part of the sidewalls 111 with hook-and-loop fasteners.

## Description

### TECHNICAL FIELD

This invention relates to an assemblable enclosure for personal use and a connector, and more particularly to an enclosure that can be readily assembled and disassembled and connectors used therein.

### BACKGROUND ART

A conventional assemblable enclosure, as typified by an assemblable toilet stall, is disclosed, for example, in Japanese unexamined patent publication No. 10-339046. This assemblable toilet stall disclosed in the publication generally comprises an assemblable box and a sanitary bowl placed inside the box. The box is assembled by folding corrugated cardboard sheets along preformed fold lines to form wall frames and connecting the wall frames to each other with joint members.

Conventional assemblable enclosures, like the assemblable toilet stall, are built in the above-mentioned manner. Such enclosures being assemblable mainly with corrugated cardboard sheets have the handling advantages that they can be stored in bulk and transported easily due to their light weight; however, the enclosures made of corrugated paper boards need to be moved into tents in the event of rain. In addition, the plurality of plastic joint members used to connect the side walls to each other require a relatively long time to assemble the enclosures.

### DISCLOSURE OF THE INVENION

The present invention is made to solve the above problems and has an object to provide an all-weather, more easily-assemblable enclosure and connector.

According to the present invention, an assemblable enclosure comprises: sidewalls made of corrugated plastic sheets and enclosing a predetermined space; and a ceiling detachably mounted on the upper part of the sidewalls and made of a corrugated plastic sheet. The ceiling is attached to the upper part of the sidewalls with a predetermined attachment member. The attachment member is a hook-and-loop fastener, a protruding portion or an engagement member.

The assemblable enclosure is made of corrugated plastic sheets as a whole and the sidewalls and ceiling are connected with the hook-and-loop fastener or protruding portion provided on the ceiling, or the engagement member. Since the ceiling is detachably mounted, the assemblable enclosure can be used in rain. In addition, the hook-and-loop fastener, protruding portion or engagement member for attaching the ceiling to sidewalls enables easy assembly of the enclosure.

It is accordingly possible to provide an assemblable enclosure that can be used in any type of weather and readily assembled, disassembled, removed and carried.

Preferably, the sidewall has an opening that can be freely opened and closed.

More preferably, the sidewall has a jutting portion, which projects laterally, at its lower part, and a predetermined weight can be placed on the jutting portion.

Preferably, the sidewalls are a plurality of rectangular sheets each having an identical height and width. The adjacent rectangular sheets are connected with elastic connectors at the ends in the width direction.

More preferably, the sidewalls are four rectangular sheets. When the ceiling is detached, the four rectangular sheets are folded so that two adjacent rectangular sheets envelop the other two rectangular sheets.

In addition, the engagement member comprises a ceiling holding portion provided so as to sandwich the ceiling and a sidewall holding portion provided so as to sandwich the sidewall in the direction intersecting with the ceiling holding portion.

Another aspect of the present invention is directed to a connector including a pair of receiving members each having a U-shaped cross-section shape and an elastic coupling member having opposite ends connected to closed ends of the receiving members. Each of the U-shaped receiving members has a side with a projecting portion near its open end, the projecting portion being projecting toward the other side.

Preferably, a folded corrugated plastic sheet having a predetermined thickness is inserted into the open end of the U-shaped receiving member. An end of the corrugated plastic sheet is engaged with the projecting portion.

A plurality of corrugated plastic sheets having a predetermined thickness can be joined to each other and inserted together into the open end of the U-shaped receiving member. An end of one of the plurality of corrugated plastic sheets can be engaged with the projecting portion.

In addition, the plurality of connected corrugated plastic sheets can be joined to each other so as to project in the opposite direction to the projecting portion.

### BRIEF DESCRIPTION OF THE DRAWINGS

FIG. 1 is a perspective view of the assemblable toilet stall according to an embodiment of the invention.
FIG. 2 illustrates individual components of the assemblable toilet stall.
FIG. 3 is a plan view of the side wall unit and the other wall making up the assemblable toilet stall.
FIG. 4 illustrates a connected area of a sidewall and the other wall.
FIG. 5 illustrates a ceiling.
FIG. 6 illustrates the assemblable toilet stall according to another embodiment of the invention.
FIG. 7 is a plan view showing a corner of the assemblable toilet stall of the embodiment.
FIG. 8 is a plan view of connectors.
FIG. 9 illustrates folded walls according to the embodiment.
FIG. 10 illustrates support portions in detail.
FIG. 11 illustrates a ceiling and walls connected according to the embodiment.
FIG. 12 illustrates a structure for stabilizing the lower part of the assemblable toilet stall.
FIG. 13 illustrates a ceiling to be mounted according to yet another embodiment.
FIG. 14 illustrates a ceiling mounted according to the embodiment in detail.
FIG. 15 illustrates a reinforcing plate attached to the assemblable enclosure.
FIG. 16 illustrates the attached plate in detail.
FIG. 17 is an unfolded view of the plate.
FIG. 18 is an exploded perspective view of an engaging device included in a locking apparatus for opening and closing a door.
FIG. 19 illustrates the operations of the locking apparatus and the positional relationship of the locking apparatus and walls.
FIG. 20 illustrates a second locking mechanism in detail.
FIG. 21 illustrates connectors and walls connected according to still yet another embodiment.

### BEST MODE FOR CARRYING OUT THE INVENTION

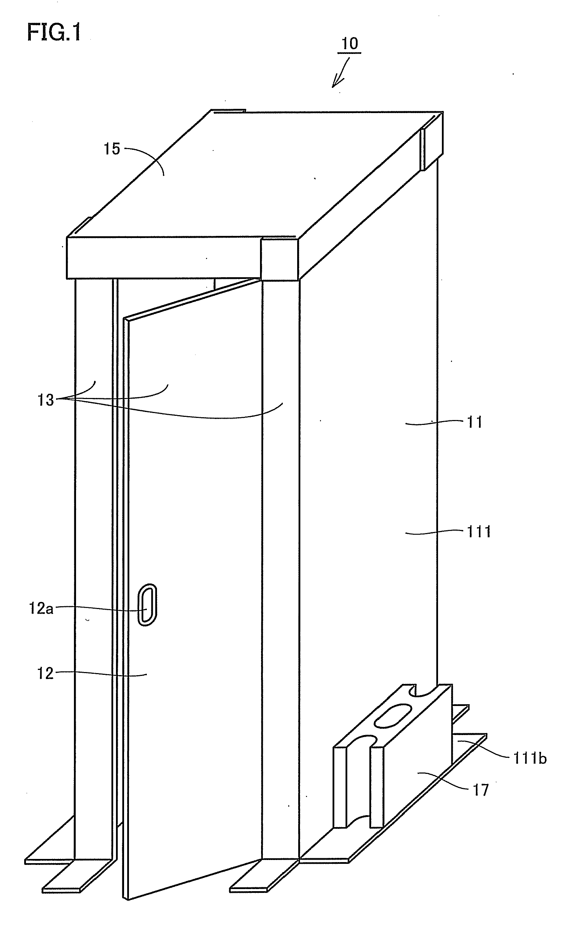

With reference to the drawings, a description will be made below about an assemblable toilet stall to which the assemblable enclosure according to an embodiment of the present invention is applied. FIG. 1 is a perspective view of the assemblable toilet stall according to the embodiment of the invention. Referring to FIG. 1, the assemblable toilet stall 10 is a rectangular cuboid as a whole and includes a side wall unit 11 composed of sidewalls on three sides, a front wall unit 13 contiguous with the side wall unit 11 and having a door 12 attached thereto, and a ceiling 15 set on the upper part of the side wall unit 11 and front wall unit 13, these components being made of corrugated plastic sheets. Preferably, the toilet stall is approximately 2,000 mm in overall height, the front wall unit 13 is approximately 800 mm in width, and the side wall is approximately 900 mm in width. The corrugated plastic sheets in use preferably have a thickness of approximately 7 mm.

The side wall unit 11 is comprised of a plurality of rectangles each having the same height and width.

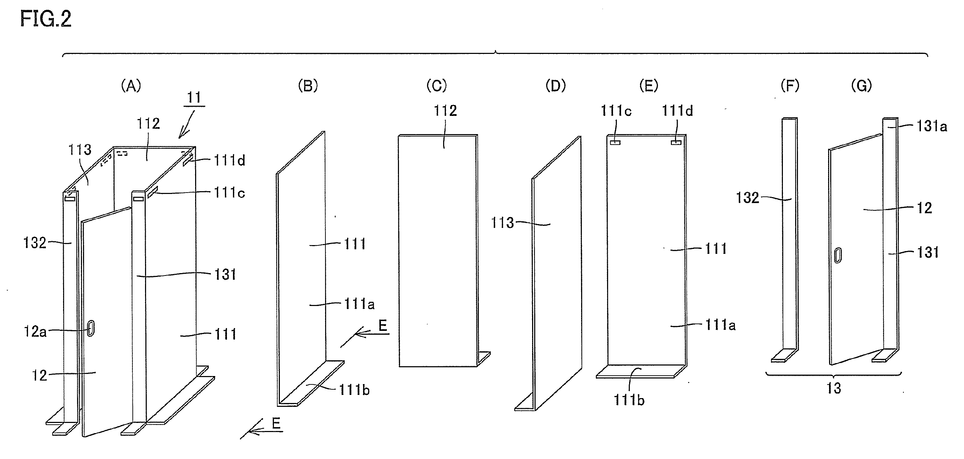

FIG. 2(A) is a perspective view showing the side wall unit 11 and front wall unit 13. Referring to FIG. 2(A), the side wall unit 11 includes a first wall 111, a second wall 112 contiguous with the first wall 111 and a third wall 113 contiguous with the second wall 112. The front wall unit 13 includes a door 12 or an opening, a door support portion 131, which supports the door 12 so it can be opened and closed freely, and a door abutting portion 132, which is opposed to the door support portion 131 with respect to the door 12.

The door 12 has a grip 12a used to open and close the door 12. The door 12 and door abutting portion 132 overlap one another when the door 12 is closed. By attaching a double-sided fastener to the overlapped part, for example, the door 12 can be freely opened and closed.

FIGS. 2(B) to 2(D) show the first wall 111, second wall 112 and third wall 113. Referring to FIG. 2(B), the first wall 111 includes a vertically-long rectangular wall portion 111a and a folded portion 111b, serving as a jutting portion, which is formed by folding the wall portion horizontally. The second wall 112 and third wall 113 also have the same folded portions. A weight, such as a concrete block or a sandbag, can be mounted on the folded portion 111b and the other folded portions. The toilet stall with the weights is depicted in FIG. 1. The folded portion 111b in FIG. 1 has a concrete block 17 mounted thereon as a weight. The weight provides wind-resistance for the assemblable toilet stall 10.

FIG. 2(E) illustrates the first wall 111 in FIG. 2(B) as viewed from the direction indicated by arrow E-E. As shown in FIG. 2(E), the first wall 111 has hook-and-loop fasteners 111c and 111d used to attach a ceiling, which will be described later, on the upper part. The second wall 112 and third wall 113 have the same structure as the first wall 111. The hook-and-loop fastener 111c and other fasteners provided on the upper part of the side wall unit 11 and front wall unit 13 are shown also in FIG. 2(A).

FIGS. 2(F) and 2(G) illustrate the front wall unit 13. Referring to FIGS. 2(F) and 2(G), the door 12 is integrally connected to the door support portion 131, but can bend freely. The preferable height and width of the door 12 is approximately 1,850 mm and 600 mm, respectively. In addition, it is preferred to create a clearance of approximately 5 cm to 10 cm between the lower edge of the door 12 and the ground surface on which the toilet stall is installed. The door support portion 131 preferably has a width of approximately 100 mm and has a portion 131a upwardly projecting beyond the door 12, the portion 131a serving as an overlap part with the ceiling.
The door abutting portion 132 has basically the same size as the door support portion 131. Both of the door support portion 131 and door abutting portion 132 have a lower-end folded portion that extends horizontally. Note that the door 12 can be a separate component from the door support portion 131.

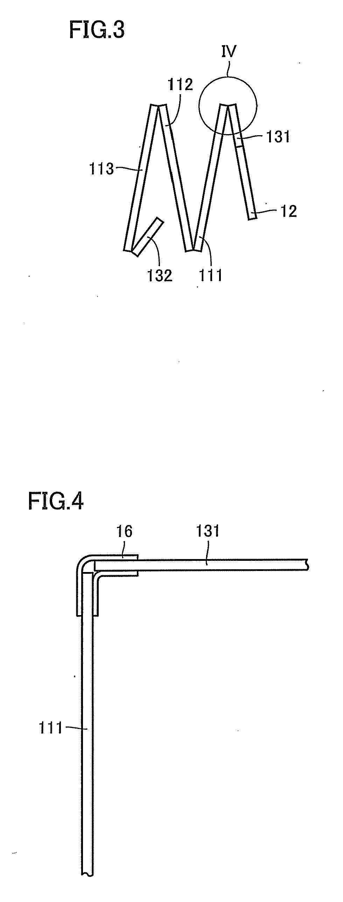

Assembly of the side wall unit 11 and front wall unit 13 will be described. FIG. 3 is a plan view of the side wall unit 11 and front wall unit 13 connected to each other, as viewed from above. Referring to FIG. 3, the door 12, door support portion 131, first wall 111, second wall 112, third wall 113 and door abutting portion 132 are connected to each other, the details of which are shown in FIG. 4. FIG. 4 is an enlarged plan view of the part circled by IV in FIG. 3. Referring to FIG. 4, adjacent door support portion 131 and first wall 111 are connected to each other by applying high-strength tape 16 to the outside and inside of the walls. The other adjacent walls are connected in the same manner. This provides flexibility to the connected areas of the side wall unit 11 and front wall unit 13. Note that the tape 16 is preferably elastic.

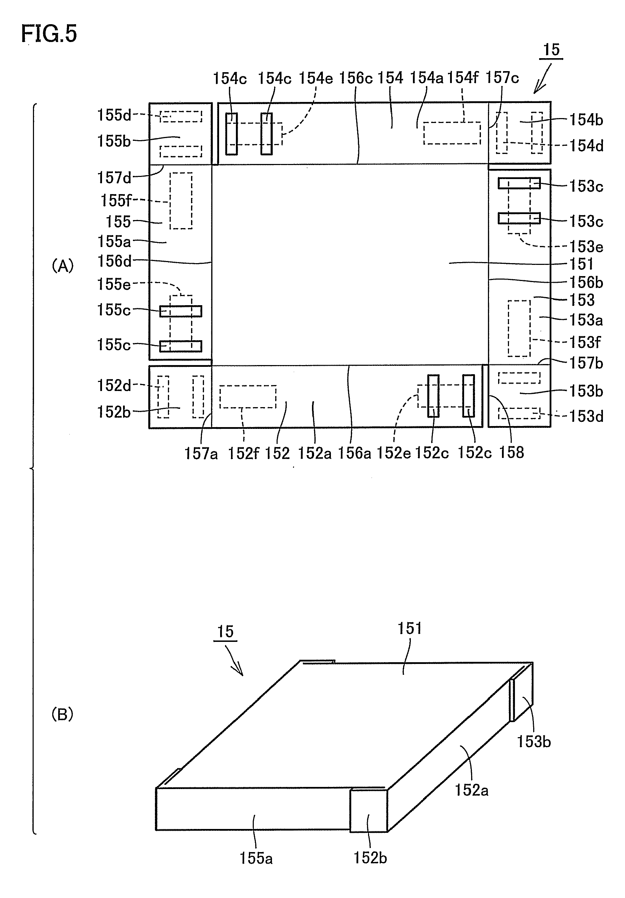

Next, the ceiling will be described. FIG. 5(A) is an unfolded view of the ceiling 15, while FIG. 5(B) illustrates the assembled ceiling 15. Referring to FIG. 5(A), the ceiling 15 in the unfolded view includes a ceiling portion 151 and four side portions 152 to 155 contiguous with the ceiling portion 151. Fold lines 156a to 156d are provided between the ceiling portion 151 and the four side portions 152 to 155. The side portions 152 to 155 include overlap sections 152a to 155a, which are overlapped with the side wall unit 11 (see FIG. 5(B)), and reinforcement sections 152b to 155b. Fold lines 157a to 157d are provided between each of the overlap sections 152a to 155a and each of the reinforcement sections 152b to 155b. An overlap section (e.g., 152a) of one side portion is separated from the reinforcement section (e.g., 153b) of the other side portion with a notch 158 formed therebetween.

Each of the overlap sections 152a to 155a and reinforcement sections 152b to 155b measures approximately 100 mm in the width direction. Each of the overlap sections 152a to 155a has an area that is adjacent to the other overlap section across the notch. Hook-and-loop fasteners 152c to 155c are attached on the front side of the area of the overlap sections, while hook-and-loop fasteners 152d to 155d are attached to the back side of the reinforcement sections 152b to 155b. The hook-and-loop fasteners 152c to 155c and hook-and-loop fasteners 152d to 155d can stick to each other.

In addition, hook-and-loop fasteners 152e to 155e and 152f to 155f are provided around opposite ends of the back surface of each of the overlap sections 152a to 155a.

The ceiling 15, shown in the unfolded view of FIG. 5(A), is folded along the fold lines 156a to 156d and 157a to 157d to engage the hook-and-loop fasteners 152c to 155c to the hook-and-loop fasteners 152d to 155d, thereby completing the ceiling 15 shown in FIG. 5(B). Referring to FIG. 5(B), the reinforcement sections 152b to 155b strengthen the four corners, which are created by folding the side portions, of the ceiling 15 to provide sufficient strength.

A ceiling 15 made of a translucent material would make the interior of the toilet stall brighter, which is more preferable.

The ceiling 15, thus completed is mounted on the top of the side wall unit so as to engage the hook-and-loop fasteners 111c, 111d of the side wall unit 11 with the hook-and-loop fasteners 152e, 152f to 155e, 155f of the ceiling 15. In this embodiment, these hook-and-loop fasteners serve as attachment members.

A sanitary bowl installed inside the toilet stall can be anything, as long as it can work in the assemblable toilet stall, and therefore its description will be omitted.

As described above, the assemblable toilet stall according to the embodiment is generally made of corrugated plastic sheets and can be assembled with the integral side wall unit and the ceiling attached thereon with the hook-and-loop fasteners, and therefore is resistant to all types of weather and enables easy assembly, disassembly, removal and transportation as necessary. The toilet stall, in which weights, such as concrete blocks or sandbags, can be put on the folded portions that horizontally extends from the lower end of the side wall unit, is less susceptible to wind.

The assemblable toilet stall in the aforementioned embodiment is just an example to which the assemblable enclosure of the present invention is applied, and the invention is not limited thereto. The assemblable enclosure can be used as a changing room, shower room, storage or the like.

Although the ceiling is a separate component from the side wall unit in the aforementioned embodiment, the present invention is not limited thereto, and the ceiling can be partially connected to the side wall unit. When assembling, the ceiling part separated from the side wall unit can be attached to the side wall unit with attachment members, like the hook-and-loop fasteners.

Although the assemblable enclosure is a rectangular cuboid in the aforementioned embodiment, the present invention is not limited thereto. When viewed as a plan, the assemblable enclosure can be elliptic, partially elliptic or triangular.

Furthermore, although the folded portions in the aforementioned embodiment extend outwardly, the present invention is not limited thereto, and the folded portions can be extended inwardly.

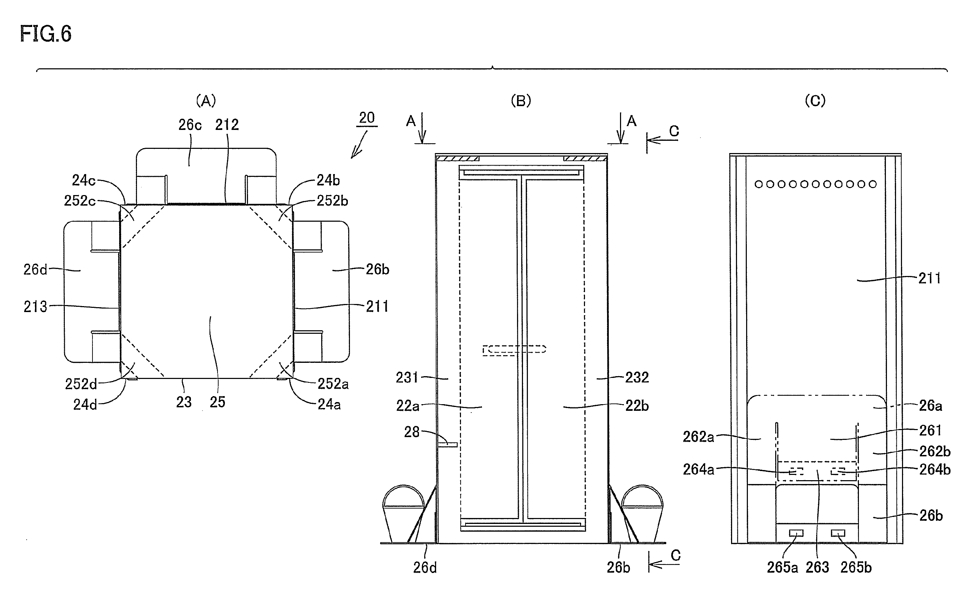

Next, a description will be made about another embodiment of the present invention. FIG. 6 illustrates an assemblable enclosure according to the embodiment of the invention. FIG. 6(B) is a front view, FIG. 6(A) is a top view as viewed from the direction indicated by arrows A-A in FIG. 6(B), and FIG. 6(C) is a side view as viewed from the direction indicated by arrows C-C in FIG. 6(B).

Referring to FIG. 6, the assemblable enclosure 20 of this embodiment is constructed basically in the same manner and made of the same materials as that of the aforementioned embodiment. The principle difference of this embodiment from the aforementioned embodiment is in that: connectors 24a to 24d are used to connect walls 211, 212, 213 and a front wall unit 23; the method for attaching a ceiling 25 to the walls 211, 212, 213 and front wall unit 23 is different; a set of double doors 22a, 22b is provided at the front wall unit 23; and support portions 26b to 26d are provided at the lower ends of the walls 211, 212, 213. Basically, the components indicated by reference numbers in tens or one hundreds in the aforementioned embodiment are indicated by reference numbers in twenties or two hundreds.

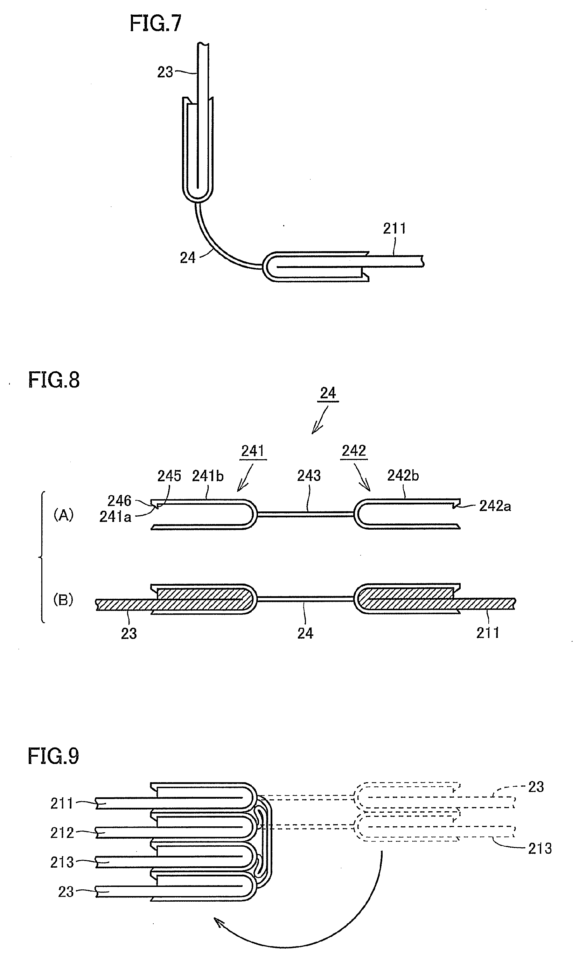

FIG. 7 illustrates the walls connected to each other with a connector 24 at a corner of the assemblable enclosure shown in the top view of FIG. 6(A). Referring to FIG. 7, a wall 211 and a front wall unit 23 are connected, for example, with a flexible elastic connector 24 having U-shaped coupling portions on opposite ends. The connector may have hinge functions.

FIG. 8(A) illustrates the details of the connector 24. Referring to FIG. 8(A), the connector 24 includes a pair of U-shaped holders 241, 242 and a coupling portion 243 coupled to the bottom (closed side) of the U-shaped holders 241, 242. Each of the U-shaped holders 241, 242 has two sides opposed to each other, and projecting portions 241a, 242a are provided on one of the sides and at the open end of the U-shaped holders so that the projections project toward the opposite side. The projections 241a, 242a are comprised of a perpendicular wall 245, which faces the bottom of the U-shaped holders 241, 242 and extends perpendicular to the sides of the U-shape holders 241, 242 and a tilt wall 246 on the open end side (the other side to the bottom) so as to widen the opening.

FIG. 8(B) illustrates the wall 211 and the other wall attached to the connector 24. Referring to FIG. 8(B), in order to attach the wall 211 and the other wall to the connector 24, the wall 211 and other wall are folded into two at the vicinity of their edges and then inserted into the U-shaped holder until their edges abut the perpendicular walls 245 and their folded parts fit the bottom of the U-shaped holder. The tilt walls 246 provided at the open end of the holders 241, 242 enable easy insertion of the wall 211 and the other wall. In addition, the projections 241a, 242a and holders 241, 242 given the above-mentioned shapes retain the wall 211 and the other wall once inserted and do not release the walls easily even if someone tries to pull out the walls.

FIG. 9 illustrates the connectors 24 being folded with the wall 211 and other walls attached thereto in the aforementioned manner and their surroundings. After a set of two connected walls are laid on another set of two connected walls as shown by dotted lines, one set of the two connected walls is folded so as to envelop the other set of the two connected walls therein as shown by the arrow, thereby packing the four walls compactly.

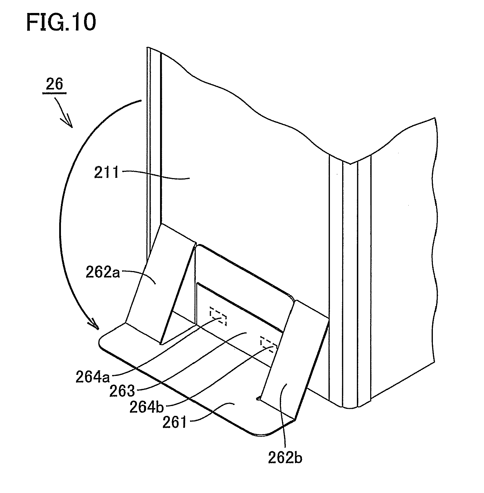

FIG. 10 illustrates the support portions 26b to 26d shown in FIG. 6. Referring to FIG. 10, in order to make the assemblable enclosure ready to use, the support portions 26b to 26d in a state indicated by dashed dotted lines in FIG. 6(C) are pulled down with respect to the upper edges of inclined strips 262a, 262b, as indicated by the arrow in FIG. 10, so that the bottom members 261 sit on the installation surface (before installation of the assemblable enclosure, the support portion 26 is affixed along the wall 211 as indicated by dashed two-dotted lines in FIG. 6). The wall 211 has hook-and-loop fasteners 265a, 265b at the predetermined lower positions, to which hook-and-loop fasteners 264a, 264b provided on the back surface of a rising portion 263 are attached, to secure the bottom member 261. The other support portions are assembled in the same manner.

Buckets filled with water, for example, serving as weights are put on the assembled support portions 26b to 26d, as shown in FIG. 6(B).

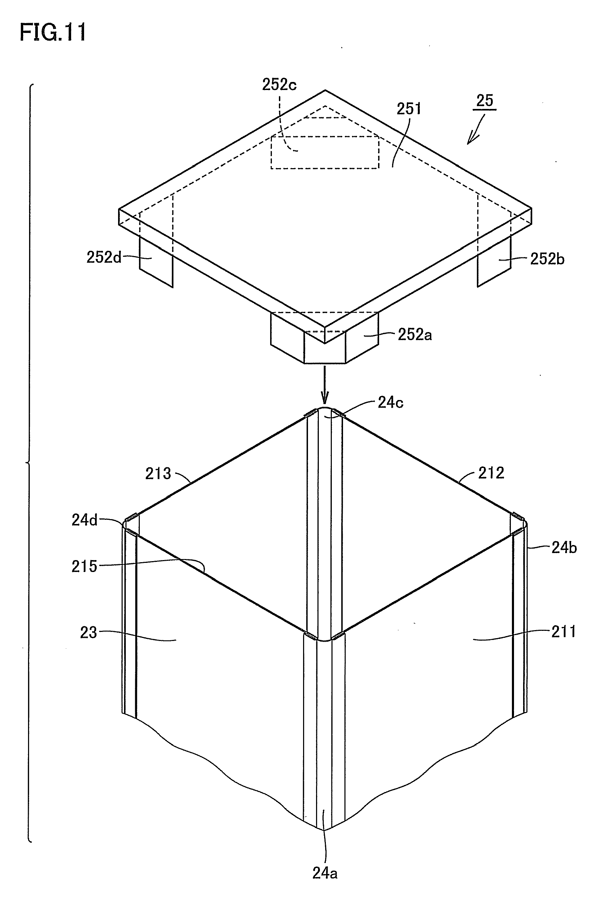

FIG. 11 illustrates a ceiling 25 to be mounted on the wall 211 and other walls. Referring to FIG. 11, the ceiling 25 has trapezoidal protrusions 252a to 252d on the lower surface around its four corners. These protrusions 252a to 252d are made by stacking about five corrugated plastic sheets which are the same material as that of the ceiling 25. The protrusions 252a to 252d can be slid and squeezed into a rectangular opening 215 formed by the wall 211 and other walls. Specifically, the size defined by opposite oblique sides of the adjacent trapezoids is set slightly larger than the size of the rectangular opening 215 formed by the wall 211 and other walls. Because of this, the insertion of the ceiling 25 inside the walls 211 to 215 secures the upper part of the assemblable enclosure 20. The size of the rectangular corrugated plastic sheet of the ceiling 25 on a plane is larger than the opening 215 just by the thickness of the wall 211 and other walls.

In this embodiment, the protrusions 252a to 252d serve as attachment members.

The ceiling 25 can be made of, but is not limited to a corrugated plastic sheet, any materials having a predetermined strength and shape retention, such as rigid urethane.

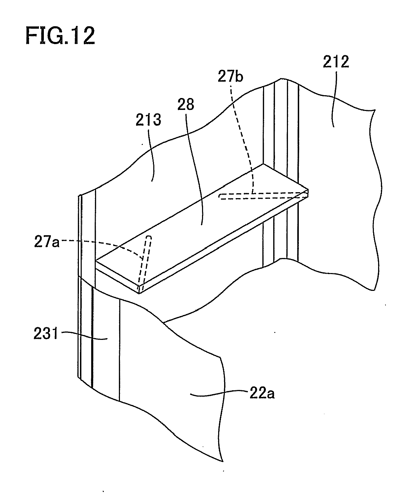

FIG. 12 illustrates a structure for stabilizing the shape of the lower part of the assemblable enclosure 20 of the embodiment. Referring to FIG. 12, strings 27a, 27b, which can be easily sagged, are provided from near an end of wall 213 to near an end of a wall 212 adjacent to the wall 213 and from near the other end of the wall 213 to near an end of a front wall portion 231 adjacent to the wall 213, so as to connect the adjacent walls. The strings 27a, 27b have the right length to stretch themselves tight when the ceiling 25 is mounted on the opening formed with the walls 211 and other walls to assemble the assemblable enclosure 20. A plate 28 is mounted on the stretched strings 27a, 27b to brace the opposing walls 212 and 231. In this manner, the brace plate 28 provided between the opposing walls at the lower part of the assemblable enclosure 20 stabilizes the lower part of the assemblable enclosure 20.

The plate can be provided on a front wall portion 232. The width of the plate 28 is smaller than the width of each of the front wall portions 231 and 232.

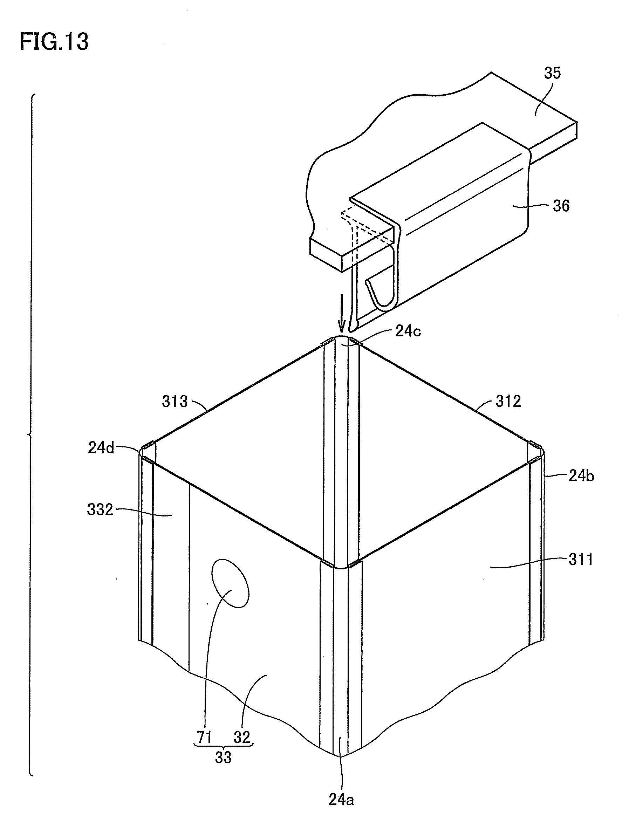

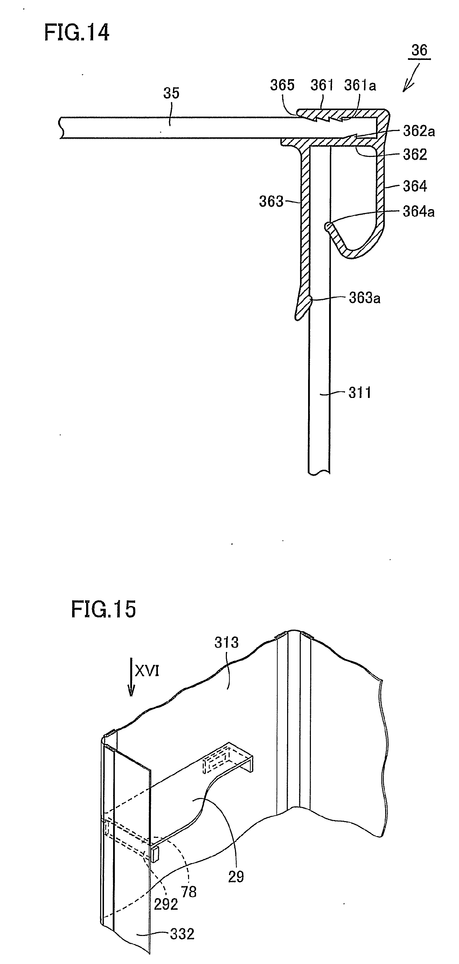

Yet another embodiment of the present invention will be described. FIG. 13 illustrates the yet another embodiment for mounting a ceiling on walls, corresponding to FIG. 11 referred to in the aforementioned embodiment. Referring to FIG. 13, a ceiling 35 is rectangular like the ceiling 25 shown in FIG. 11, but has a larger area (see FIG. 14), and is provided with plastic fixing members 36 in the middle of each of the four sides. Walls 311 to 313 (corresponding to the walls 211 to 213 of the aforementioned embodiment) and front wall unit 33 (including a door 32 and door abutting portion 332) have the same shape as that in FIG. 11 in general, but a window 71 is formed at the upper part of the door 32 in this embodiment.

FIG. 14 illustrates the ceiling 35 attached to the wall 311. As shown in FIG. 14, the fixing member 36 includes ceiling holding portions 361, 362, which extend horizontally in parallel so as to sandwich the ceiling 35, a first wall holding portion 363, which extends vertically down from the vicinity of the open end 365 of the ceiling holding portion 362, and a second wall holding portion 364, which is coupled to both the ceiling holding portions 361, 362, extends downwardly in the vertical direction and curves upwardly from its midpoint. The first and second wall holding portions 363, 364 retain the wall 311 and other walls.

For the purpose of preventing the ceiling 35 from easily slipping out of the open end of the fixing member 36, the ceiling holding portions 361, 362 have sawtooth projections 361a, 362a, respectively. The projections have acute tips pointing toward the back direction which is the opposite direction to the open end 365. The first and second wall holding portions 363, 364 are also provided with protrusions 363a, 364a extending toward the ceiling 35 so as to push against the wall 311 in order to prevent the wall 311 and other walls from easily slipping out. Thus, in this embodiment, the fixing member 36 serves as a attachment member.

Next, yet another embodiment for stabilizing the shape of the lower part of the assemblable enclosure will be described. FIG. 15 illustrates the structure of the embodiment, corresponding to the components shown in FIG. 12. Although the door 22 in FIG. 12 is a double-door as shown in FIG. 6, the door in this embodiment is a single swinging door as shown in FIGS. 1 and 13. In the case of such a single swinging door, the plate 28 attached to only the wall 213 as shown in FIG. 12 may not be strong enough to support the door opening/closing portion. To solve the problem, a reinforcing plate 29 is provided so as to engage with the door abutting portion 332 and a wall 313 adjacent thereto in this embodiment.

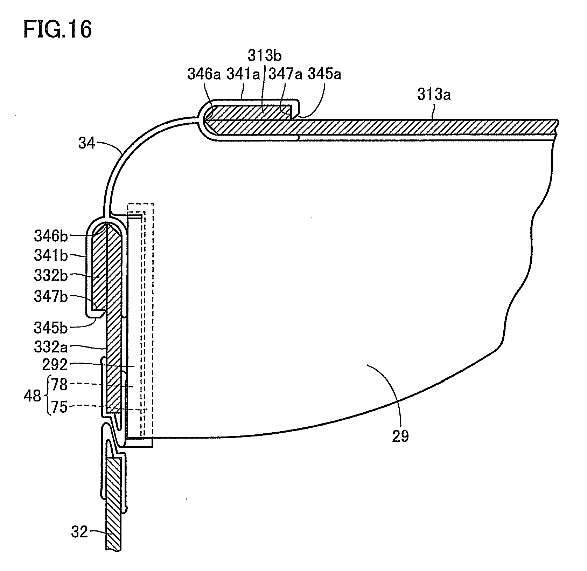

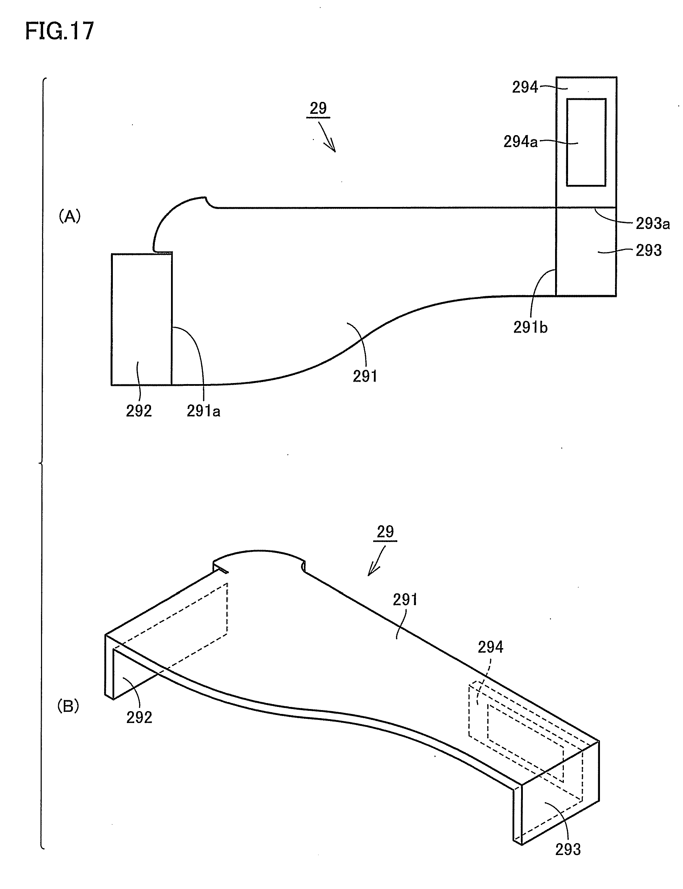

FIG. 16 is an enlarged view of a part viewed along the arrow XVI in FIG. 15. FIG. 17(A) is an unfolded view of the plate 29, while FIG. 17(B) is an assembled view. Referring to FIG. 16, the wall 32 and wall 313 adjacent to each other are connected with the same connector 34 shown in FIGS. 7 and 8. In this embodiment, a corrugated plastic sheet is held by the connector 34 in a different way from the aforementioned embodiment, but the difference will be described later.

As shown in FIG. 16, in this embodiment, the plate 29 has a planar shape fitting along the connector 34 and the adjacent walls 332a, 313a connected with the connector 34 and extends to the border of the door 32. This shape strengthens the wall 332a. In addition, an engaged device 48, included in a locking apparatus which will be described later, is attached to the door abutting portion 332.

Referring to FIG. 17, the plate 29 is composed of a flat plate 291 having a wider end and narrower end in the longitudinal direction, a first side plate 292 provided to the wider end of the flat plate 291, a second side plate 293 provided to the narrower end and a third side plate 294 continuously extending from the second side plate 293 in the direction orthogonal to the longitudinal direction of the flat plate 291. Provided between the flat plate 291 and first side plate 292, the flat plate 291 and second side plate 293, and the second side plate 293 and third side plate 294 are fold lines 291a, 291b, 293a, along which the sided plates can be folded. Folding the side plates along the fold lines 291a, 291b, 293a results in a table-like plate 29 shown in FIG. 17(B).

The first side plate 292 is inserted into a groove of the engaged device, which will be described later, provided on the door abutting portion 332. Provided on the third side plate 294 is a hook-and-loop fastener 294a that is attached to a hook-and-loop fastener (not shown) provided on the wall 313. The plate 29 attached as shown in FIG. 15 can increase the strength around the door.

Next, the edge shape of the corrugated plastic sheet housed in the connector will be described. The connector structure of this embodiment is the same as that shown in FIG. 8, but reference number 34 is assigned to the connector because the edge of the corrugated plastic sheet to be housed in the connector has a different shape. Referring to FIG. 16, unlike the connector 24 in FIG. 8 in which a single corrugated plastic sheet that is folded into two is housed in the U-shaped holders, two corrugated plastic sheets are housed in U-shaped holders 341a, 341b of the connector 34 in this embodiment, i.e., corrugated plastic sheets 313a, 332a, which extend from outside to inside the U-shaped holders 341a, 341b of the connector 34, respectively, and corrugated plastic sheet pieces 313b, 332b, which are cut short, are adhered to the corrugated plastic sheet 313a, 332a, respectively, with an adhesive or the like. The adhered two corrugated plastic sheets 313a and 313b and 332a and 332b have acutely cut edges. These acute-angled edges are housed so as to abut the bottoms 346a, 346b of the U-shaped holders of the connector 34. The opposite edges of the shorter corrugated plastic sheets to the acute-angled edges perfectly fit with vertical walls 347a, 347b of projections 345a, 345b of the connector 34, respectively.

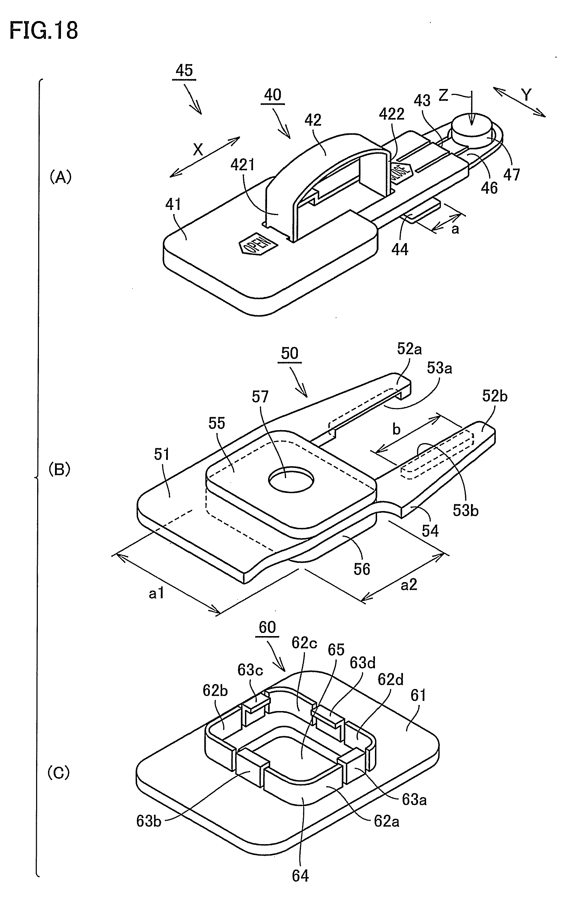

A locking apparatus of the door will be described. The locking apparatus includes an engaging device 45 and engaged device 48. FIG. 18 is an exploded perspective view showing the engaging device 45 in the locking apparatus of the door. The engaging device 45 includes a slider 40 with a handle 42 (FIG. 18(A)), a guide 50 guiding the slider 40 to move from side to side (FIG. 18(B)) and a mount 60 used to attach the guide 50 to the predetermined position on the door (FIG. 18(C)), these components being assembled into one unit.

Referring to FIG. 18(A), the slider 40 includes a first part 41, which is a nearly rectangular cuboid whose bottom is open, a second part 43 connected with the first part 41 laterally (in the direction indicated by X in FIG. 18) and a third part 46 connected with the second part 43 laterally. The size of the second part 43 along the width direction (in the direction indicated by Y in FIG. 18) is smaller than the width of the first part 41. The slider 40 includes raised portions 421, 422 raised from the first part 41 and second part 43, respectively, and a connecting portion 42 connecting the raised portions. This connecting portion 42 serves as a handle. The second part 43 has projections 44 projecting widthwise from the lower edges of both sides along the width direction. The projections 44 have a predetermined length *a* in the lateral direction.

The third part 46 is connected to the second part 43 with a predetermined width and is shaped into a triangle having a laterally-extending round vertex. The third part 46 is provided with a circular push button 47. When pushed, the push button 47 engages with a through hole 76 of the engaged device 48, as will be described later.

FIG. 18(B) illustrates the guide 50 partially cut away. Referring to FIG. 18(B), the guide 50 includes a rectangular platform 55, which movably supports the first part 41 in a lateral direction on its upper surface, a rectangular holding plate 51 holding the platform 55, a pair of guide groove holding arms 52a, 52b extending laterally from ends, opposed in the wide direction, of the holding plate 51. The guide groove holding arms 52a, 52b have a predetermined length in the width direction and receive the second part 43 therebetween. On the underside of the guide groove holding arms 52a, 52b at which the second part 43 is to be located, guide grooves 53a, 53b are formed so that the aforementioned projections 44 are slidably engaged. The length of each guide groove 53a, 53b in the lateral direction is b, that is set so as to be *b>a,* therefore, the slider 40 can move laterally on the guide 50.

There is a rectangular wall section 56 on the back of the platform 55 on the holding plate 51. The wall section 56 has a length of *a1* in the direction Y and a length of *a2* in the direction X in FIG. 18(B).

Referring to FIG. 18(C), the mount 60 includes a flat plate 61 and a generally rectangular wall section 64 formed nearly in the center of the flat plate 61. The wall section 64 is composed of first walls 62a, 62b, 62c, 62d formed at four corners of the rectangle and extending a predetermined length in the directions along the two sides intersecting at each corner and second walls 63a, 63b, 63c, 63d arranged between the first walls 62a, 62b, 62c, 62d with a space. The second walls 63a, 63b, 63c, 63d are higher than the first walls 62a, 62b, 62c, 62d and each has an upper end that is inwardly bent along the horizontal direction (toward the inside of the wall section 64). The folded parts engage with a catching hole (not shown) of the wall section 56 shown in FIG. 18(B), thereby unifying the guide 50 and mount 60. The flat plate 61 is affixed to the door. In addition, there is an aperture 65 enclosed by the wall section 64 on the flat plate 61, and the door has an aperture at the position corresponding to the aperture 65.

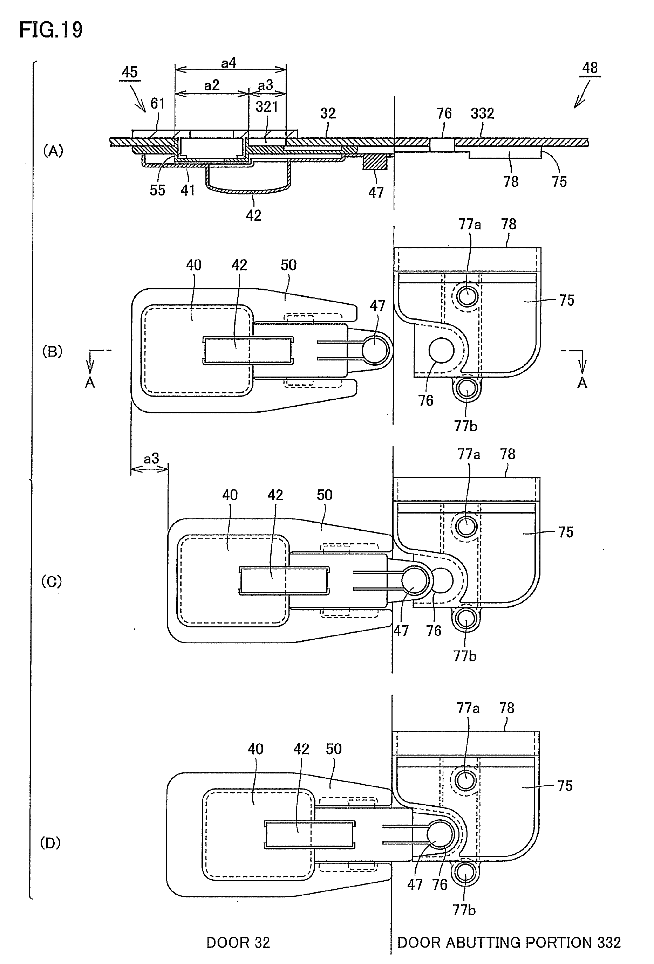

Next, a description will be made about how to open and close the door with the locking apparatus. FIG. 19 illustrates the positional relationship of an engaging section and engaged section of the locking apparatus while showing the state of the door to be opened and closed. In this description, the door 32 and door abutting portion 332 are used in the positional relationship shown in FIG. 16. FIG. 19(B) shows a door in an open state, FIG. 19(C) shows the door in a secured state, and FIG. 19(D) shows the door in a locked state. FIG. 19(A) is a cross-sectional view of the part indicated by arrow A-A in FIG. 19(B). Each figure shows the door 32 on its left side and the door abutting portion 332 on its right side and the center line representing the border line where the door 32 abuts the door abutting portion 332, in other words, representing edges of the door 32 and the door abutting portion 332.

Referring to FIGS. 19(A) and 19(B), the locking apparatus includes an engaging device 45 provided on the door 32 and an engaged device 48 provided on the door abutting portion 332. Formed on the corrugated plastic sheet making up the door 32 at the position to which the engaging device 45 is to be attached is an aperture 321 having a width indicated by *a4* in the lateral direction and a height indicated by *a1,* which was described with reference to the wall section 64, in the vertical direction. The wall section 64 is inset to the aperture 321 from the outer side of the door 32. The wall section 56 of the guide 50 is mounted on the wall section 64 to fix the engaging device 45 on the door 32. Since the size of the wall section 64 is smaller than the width size *a4* of the aperture 321 of the door 32, the engaging device 45 of the locking apparatus can slide in the width direction (in the lateral direction in the figures) by a distance indicated by *a3.*

On the other hand, the engaged device 48 is secured to the door abutting portion 332 by screws 77a, 77b. The engaged device 48 includes an engaged device body 75, which is generally a rectangular flat plate, having a rectangular groove 78 on the upper part thereof.

As appreciated from FIG. 19, when the door 32 is open, the guide 50 and the slider 40, movable thereon, stay on the side of the door 32.

Referring to FIG. 19(C), the door 32 is secured by moving the handle 42 rightward (toward "close" in FIG. 18) to move the entire guide 50 rightward. As shown in FIGS. 19(B) and 19(C), the guide 50 and slider 40 move rightward by a distance equal to *a3* of the aperture 321 of the door 32.

The door 32 in a locked state is depicted in FIG. 19(D). When the door 32 is locked, the handle 42 is further strongly moved rightward. This moves only the slider 40 to the position shown in FIG. 19(D). The push button 47 that is pushed while the slider is in the position passes through the through hole 76, thereby coupling the door 32 and door abutting portion 332. Consequently, the door 32 can not be opened from the front side.

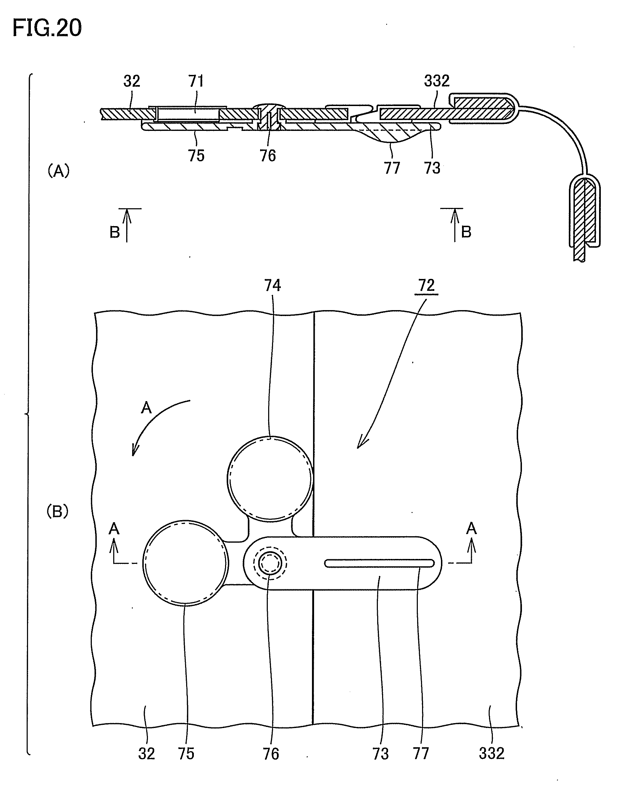

In the above embodiment, a single locking apparatus is provided around the open/close area of the door; however, two locking apparatuses will greater improve safety. FIG. 20 illustrates a second locking mechanism utilizing the window formed on the door 32 shown in FIG. 13.

FIG. 20(A) is a cross-sectional view showing a door 32 with the window 71 and a door abutting portion 332, while FIG. 20(B) illustrates the area taken along arrow B-B in FIG. 20(A), viewed from inside of the toilet. The door 32 in this situation is closed.

Referring to FIG. 20, the second locking mechanism 72 includes a flat plate 73 that is rotatable around a shaft 76 provided on the door 32 in the vicinity of the door abutting portion 332, a first disk 75 opposed to the rod portion 73 with respect to the shaft 76 and a second disk 74 located perpendicular to the direction in which the shaft 76 and first disk 75 extend and being rotatable around the same shaft 76. The flat plate 73, first disk 75 and second disk 74 can turn around the shaft 76 in the direction indicated by arrow A in FIG. 20(B). While the door 32 is closed, the first disk 75 is positioned so as to fully cover the window 71, the second disk 74 is held by a stopper (not shown) so as not to turn in the opposite direction to the direction indicated by arrow A from the position shown in FIG. 20, and the flat plate 73, which is laid horizontally, has an end extending to the door abutting portion 332, thereby preventing the door 32 from being opened. The flat plate 73 has an arc-shaped ridge 77 projecting from the flat plate 73.

While the toilet door 32 is open, the entire second locking mechanism 72 including the flat plate 73 is positioned on the door 32 side, but the second disk 74 is in the position at which the first disk 75 was.

After locking the door with the locking apparatus, a user turns the flat plate 73 by using the ridge 77 toward the door abutting portion 332 side, thereby double-locking the door 32 with the second locking mechanism 72.

This operation of the second locking mechanism 72 helps the user to ensure that the door 32 is double-locked because the user can look out the window 71 whenever the user opens or closes the door 32.

Coloring the surface of the first disk 75 facing outside red and the surface of the second disk facing outside black informs users who are outside the toilet whether or not the toilet is occupied.

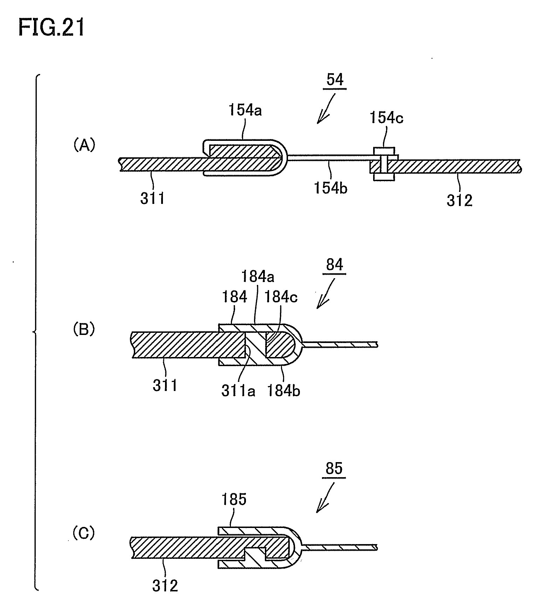

Next, still yet another embodiment showing connections of a connector and a wall will be described. FIG. 21 illustrates connectors and walls connected to each other according to the still yet another embodiment. In this description, the walls 311 and 312 shown in FIG. 13 are connected.

FIG. 21(A) illustrates the first modification of the connector. The connector described above has a pair of U-shaped holders; however, the connecter in this embodiment, as shown in FIG. 21(A), has only one U-shaped holder 154a connected to a coupling portion 154b. The other end of the coupling portion 154b is connected to the adjacent wall 312 with a connecting member 154c, such as a pin.

Next, a connector according to another embodiment will be described. FIG. 21(B) illustrates a connector and a wall connected to each other according to this embodiment. In this embodiment, the U-shaped holder 184 of the connector 84 has two faces 184a, 184b facing each other, and the face 184b is provided with a projection 184c which can abut the opposed face 184a. On the other hand, the wall 311 is provided with a through hole 311a at a predetermined position, through which the projection 184c passes.

Next, a connector according to yet another embodiment will be described. FIG. 21(C) illustrates a connector and a wall connected to each other according to this embodiment. In this embodiment, a connector 85 has a U-shaped holder 185. The holder 185 has two faces 185a, 185b facing each other. The face 185b is provided with a projection 185c projecting toward the opposed face 185a. The projection 185c has a half height of that of the projection 184c of the connector 84. On the other hand, the wall 311 is provided with a recess 312a at a predetermined position with which the projection 185c engages.

Note that the connectors 84, 85 can have a pair of U-shaped holders or a single U-shaped holder as with the connector 54.

The foregoing has described the embodiment of the present invention by referring to the drawings. However, the invention should not be limited to the illustrated embodiment. It should be appreciated that various modifications and changes can be made to the illustrated embodiment within the scope of the appended claims and their equivalents.

### INDUSTRIAL APPLICABILITY

This easily-assemblable enclosure according to the present invention can be advantageously utilized as an assemblable enclosure having improved portability.

## Claims

1. An assemblable enclosure comprising:
sidewalls made of corrugated plastic sheets and enclosing a predetermined space; and
a ceiling detachably mounted on the upper part of said sidewalls and made of a corrugated plastic sheet, wherein
said ceiling is attached to the upper part of said sidewalls with a predetermined attachment member, and
said attachment member is a hook-and-loop fastener, a protruding portion or an engagement member.

2. The assemblable enclosure according to claim 1, wherein
said sidewall has an opening that can be freely opened and closed.

3. The assemblable enclosure according to claim 1, wherein
said sidewall has a jutting portion at its lower part, said jutting portion projecting laterally, and
a predetermined weight can be placed on said jutting portion.

4. The assemblable enclosure according to claim 1, wherein
said sidewalls are a plurality of rectangular sheets each having an identical height and width, and said adjacent rectangular sheets are connected with elastic connectors at the ends in the width direction.

5. The assemblable enclosure according to claim 4, wherein
said sidewalls are four rectangular sheets, and
when said ceiling is detached, said four rectangular sheets are folded so that adjacent two rectangular sheets envelop the other two rectangular sheets.

6. A connector including a pair of receiving members each having a U-shaped cross-section shape and an elastic coupling member having opposite ends connected to closed ends of the receiving members, wherein each of said U-shaped receiving members has a side with a projecting portion near its open end, said projecting portion being projecting toward the other side.

7. The connector according to claim 6, wherein
a folded corrugated plastic sheet having a predetermined thickness is inserted into the open end of said U-shaped receiving member, and an end of said corrugated plastic sheet is engaged with said projecting portion.

8. The connector according to claim 6, wherein
a plurality of corrugated plastic sheets having a predetermined thickness are joined to each other and inserted together into the open end of said U-shaped receiving member, and an end of one of said plurality of corrugated plastic sheets is engaged with said projecting portion.

9. The connector according to claim 6, wherein said plurality of corrugated plastic sheets are joined to each other so as to project in the opposite direction to said projecting portion.

10. The assemblable enclosure according to claim 1, wherein
said engagement member comprises a ceiling holding portion provided so as to sandwich said ceiling and a sidewall holding portion provided so as to sandwich the sidewall in the direction intersecting with said ceiling holding portion.
